# EUROPEAN PATENT APPLICATION

(11) **EP 1 792 644 A1**
(43) Date of publication of application: **06.06.2007**
(21) Application number: 07002534.1
(22) Date of filing: 25.06.2004
(51) Int. Cl.: B01D 29/11, B01D 35/027, F02M 37/22

(54) **Fuel filter device**

(30) Priority: 31.07.2003 JP 2003283680
(62) Divisional of application: 04014952.8
(71) Applicant: NIFCO INC., Yokohama-shi, 244-8522 (JP)
(72) Inventor: Sato, Hiroji, Tokyo (JP)
(74) Representative: Banzer, Hans-Jörg

(57) **Abstract**

With a fuel filter device (F), it is possible to reduce clogging of a filter member (1) as little as possible while improving the filtering accuracy of the filter member. The filter member includes at least two non-woven layers (12), wherein one non-woven layer has air holes with an average diameter different from those of the other non-woven layer. Among the non-woven layers, the non-woven layer located on an inner side of the filter member has the air holes with the average diameter smaller than those of the non-woven layers located on an outer side of the non-woven layer. The filter member (1) includes an outermost layer (13) formed of a mesh fabric.

## Description

The present invention relates to a fuel filter device to be attached to a fuel suction opening inside a fuel tank.

Fuel inside a fuel tank is transferred to an internal combustion engine through a suction pipe disposed inside the fuel tank and the like. In order to remove water and a foreign material from fuel not to move to a fuel pump, a filter device is attached to a fuel suction opening of the suction pipe. As a filter device like this, there is a filter device shown in Patent Reference 1.

This type of filter device includes a bag-shaped filter member having an inner space communicating with the fuel suction opening. Such a filter member includes a non-woven layer formed with a span bond method inside the outermost layer formed of an extruded mesh, and a non-woven layer formed with a melt blown method inside the non-woven layer.

Such a filter device tends to have a large difference between an average diameter of air holes in the non-woven layer formed with the span bond method and that in the non-woven layer formed with the melt blown method. This tendency becomes notable as filtering accuracy improves. Specifically, it is difficult to reduce a fiber diameter of the non-woven layer formed with the span bond method, so that the average diameter of the air holes of the non-woven layer has a limit (20 µm at the minimum) to make the mesh finer. On the other hand, it is easy to reduce a fiber diameter of the non-woven layer formed with the melt blown method, so that the average diameter of the air holes of the non-woven layer can be appropriately made smaller. Accordingly, in the filter member disclosed in Japanese Patent Publication (Kokai) No. 2000-246026, the average diameter of the air holes of the non-woven layer formed by the melt blown method is made smaller in order to improve the filtering accuracy. However, when the average diameter of the air holes of the non-woven layer formed with the melt blown method is made smaller, the difference from the average diameter of the air holes of the non-woven layer formed by the span bond method increases. As a result, dust and the like included in the fuel to be captured are mostly captured by the non-woven layer formed with the melt blown method. (In other words, a filtering slope becomes steep, so that the non-woven layer formed with the span bond method does not function as a pre-filter effectively.)

Consequently, in the filter device according to Japanese Patent Publication (Kokai) No. 2000-246026, when the filtering accuracy is improved, i.e. dust and the like included in the fuel to be captured become smaller, it is difficult to prevent clogging of the non-woven layer formed with the melt blown method for a long time. When the clogging increases, a pressure of the fuel intake increases (pressure drop increases), so that load of the fuel pump increases.

A main object of the present invention is to reduce the clogging of the filter member as little as possible, while improving the filtering accuracy of the filter member in the filter device as much as possible.

According to the present invention, these objects are achieved by a fuel filter device as claimed by independent claim
1. The dependent claims define preferred embodiments of the invention.

In order to achieve the objects described above, according to the invention, a fuel filter device includes the following elements (1) to (5).
(1) A filter device includes a bag-shaped filter member, and is attached in such a way that an inner space of the filter member communicates with a fuel suction opening inside a fuel tank.
(2) The filter member includes more than two non-woven layers.
(3) One of the non-woven layers has air holes having an average diameter different from those of another of the non-woven layers.
(4) Among the more than two non-woven layers, the non-woven layer located on an inner side of the filter member has air holes having an average diameter smaller than those of the non-woven layer located on an outer side of the non-woven layer.
(5) The non-woven layers are formed with a melt blown method so that a filtering slope becomes gentle.

With such a structure, the non-woven layer located on the outer side of the filter member captures dust with a relatively large diameter and the like, and the non-woven layer located on the inner side of the filter member captures dust with a relatively small diameter and the like. In a state that the filter member hardly has clogging, it is possible to remove dust and the like from the fuel sucked in.

With the melt blown method, it is possible to effectively reduce a diameter of a synthetic fiber of the non-woven layer, so that the air holes of the non-woven layer are adjusted to have a small average diameter. As a result, it is possible to eliminate a large difference between the average diameter of the air holes of the non-woven layer located on the inner side of the filter member and the average diameter of the air holes of the non-woven layer located on the outer side of the filter member, thereby making the filtering slope gentle. Accordingly, the non-woven layer located on the outer side of the filter member effectively functions as a pre-filter relative to the non-woven layer located on the inner side.

Also, in order to achieve the objects described above, among the more than two non-woven layers formed with the melt blown method, the non-woven layer located on the most inner side of the filter member has the air holes having an average diameter ranging from 5 µm to 10 µm. Further, among the more than two non-woven layers, a difference between the average diameter of the air holes of one non-woven layer located on the inner side of the filter member and the average diameter of the air holes of another non-woven layer adjacent to the non-woven layer and located on the outer side of the previous non-woven layer is less than 40 µm.

Specifically, considering a shape of dust and the like usually included in the fuel, it is possible to remove dust and the like inside the fuel passing through the filtration by the filter member with the structure described above. Also, it is possible to eliminate the clogging of the filter member for a long time.

Also, the outermost layer of the filter member may be formed of a mesh.

With such a structure, the outermost layer separates moisture in the fuel from the fuel, so that the moisture does not enter the filter member. Further, the non-woven layer formed with the melt blown method does not directly contact an inner wall of the fuel tank and the like, thereby preventing worn out.

Also, the innermost layer of the filter member may be formed of the non-woven layer formed with the span bond method.

With such a structure, the innermost layer provides the filter member with rigidity (stiffness), thereby easily maintaining a shape of the filter member.

Also, each layer of the filter member formed of a plurality of layers may be formed of the same synthetic resin.

With such a structure, after constituent members formed in a sheet or a mat shape are laminated, each layer is easily integrated with welding to form the bag-shaped filter member.

According to the present invention, it is possible to eliminate clogging of the filter member for a long time, while the filtering accuracy of the filter member of the filter device is improved as much as possible.

Hereinafter, embodiments of the present invention will be described with reference to Figs. 1 to 3.
Fig. 1 is a cross-sectional structural view showing a filter device F in a use state;
Fig. 2 is a graph showing an example of a combination of non-woven layers 12 of a filter member 1; and
Fig. 3 is an enlarged cross-sectional structural view showing a structural example of the filter member 1.

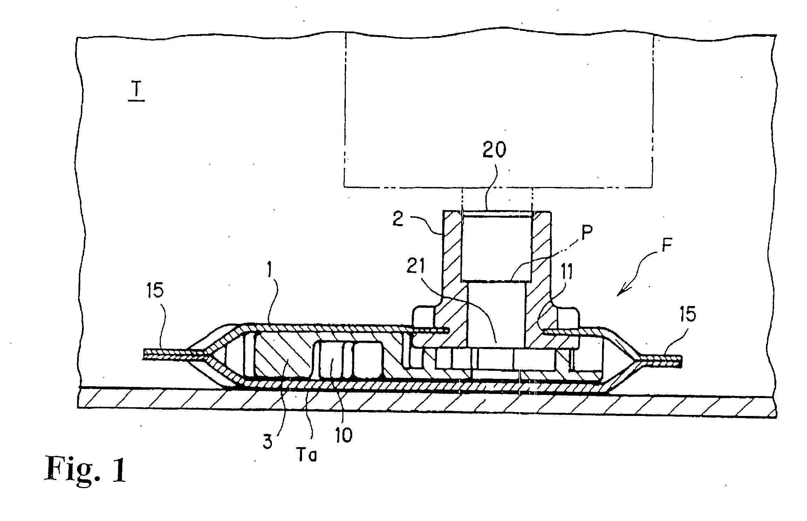

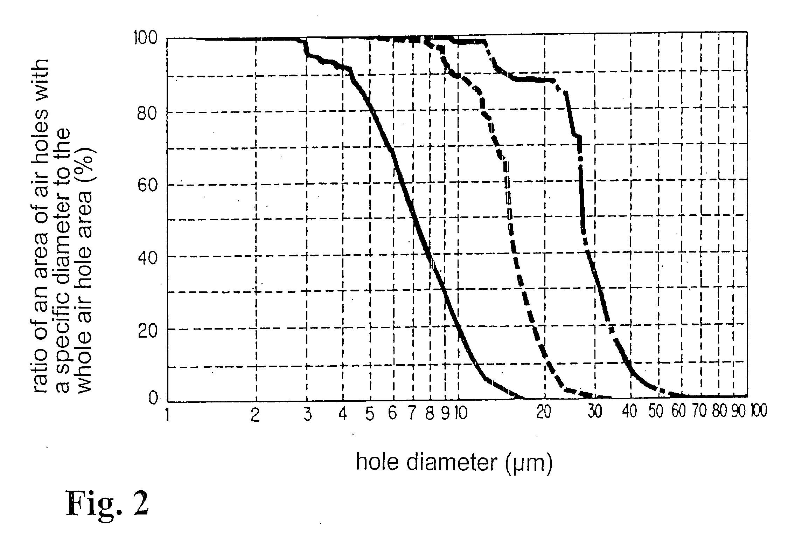

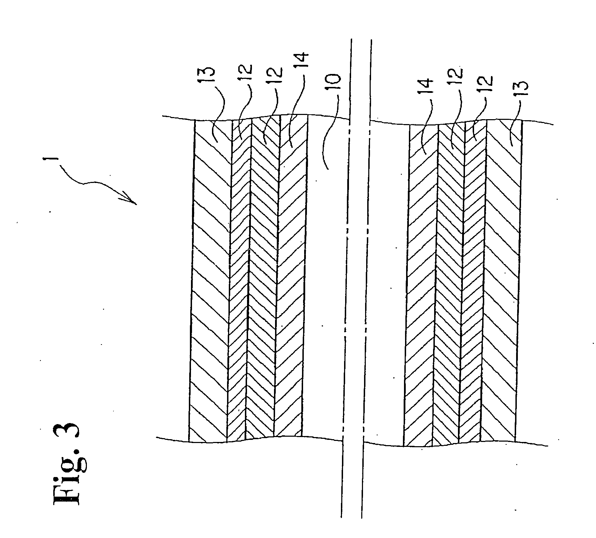

Fig. 1 is a structural view showing a filter device F in a state attached to a fuel suction opening P inside a fuel tank T. Fig. 3 is a cross-sectional structural view showing an example of a filter member 1 of the filter device F (only cross-sectional structures of an upper side and a lower side of the filter member 1 are shown in Fig. 3, and a description of an interval formation member 3 housed in the filter member 1 is omitted). Also, Fig. 2 is a graph showing characteristics of three non-woven layers 12 formed with a melt blown method in the filter member 1.

The fuel filter device F according to the embodiment is attached to the fuel suction opening P inside the fuel tank T of an automobile, a motorcycle, and the like, for preventing water or a foreign material from entering fuel transferred to an internal combustion engine through the fuel suction opening P.

Typically, the filter device F is attached to the fuel suction opening P of the suction pipe wherein the fuel suction opening P is located inside the fuel tank T.

A fuel pump provided inside or outside the fuel tank T transfers fuel to the internal combustion engine through the fuel suction opening P.

The filter device F includes the bag-shaped filter member 1, and is attached to the fuel suction opening P in such a way that an inner space 10 of the bag-shaped filter member 1 communicates with the fuel suction opening P.

More specifically, in the embodiment shown in the drawings, the filter device F includes a plastic cylindrical socket member 2 with an end portion 20 connected to the fuel suction opening P and the other end portion 21 connected to a communicating hole 11 formed in the filter member 1. The cylindrical socket member 2 allows the inner space 10 of the filter member 1 to communicate with the fuel suction opening P.

Also, in the embodiment shown in the drawings, the filter device F includes an interval formation member 3 housed in the filter member 1 for maintaining the filter member 1 in a bulging bag-shaped shape all the time.

Specifically, in the embodiment shown in the drawings, the interval formation member 3 has a thickness such that an upper surface thereof contacts an inner surface of an upper part of the bag-shaped filter member 1 and a lower surface thereof contacts an inner surface of a lower part of the filter member 1. The interval formation member 3 is fitted in the filter member 1 for maintaining the filter member 1 in the bulging bag-shaped shape all the time. In the interval formation member 3, a plurality of fuel passing portions (not shown in the drawing) is formed between the upper surface and the under surface thereof.

Also, the filter member 1 includes more than two non-woven layers 12.

Further, one of the non-woven layers 12 has air holes having an average diameter different from those of another non-woven layer 12. Among the more than two non-woven layers 12, the non-woven layer 12 located on an inner side of the filter member 1 has the air holes having an average diameter smaller than that of the air holes of the non-woven layer 12 located on an outer side of the non-woven layer 12. Also, the non-woven layers 12 are formed with the melt blown method, so that the filtering slope becomes gentle.

With such a structure, the non-woven layer 12 located on the outer side of the filter member 1 captures dust with a relatively large diameter and the like, and the non-woven layer 12 located on the inner side of the filter member 1 captures dust with a relatively small diameter and the like. In a state that the filter member 1 hardly has clogging, it is possible to remove dust and the like from the fuel sucked in. Specifically, when the non-woven layer 12 is a single layer, the non-woven layer 12 captures dust with various sizes and the like, so that the filter member 1 is easily clogged over time. Also, when the filter member 1 is formed of the more than two non-woven layers 12 with the air holes having a same diameter, the non-woven layer 12 located on the most outer side of the filter member 1 captures all dust and the like. As a result, the filter member 1 is easily clogged over time over time. However, in the filter device F, it is possible to eliminate the clogging of the filter member 1 for a long time.

With the melt blown method, it is possible to effectively reduce a diameter of a synthetic fiber of the non-woven layer 12, so that the air holes of the non-woven layer 12 are adjusted to have a small average diameter. As a result, it is possible to eliminate a large difference between the average diameter of the air holes of the non-woven layer 12 located on the inner side of the filter member 1 and the average diameter of the air holes of the non-woven layer 12 located the outer side of the filter member 1, thereby making a filtering slope gentle. Accordingly, the non-woven layer located on the outer side of the filter member can appropriately function as a pre-filter relative to the non-woven layer located on the inner side. Specifically, when the non-woven layer 12 formed with the span bond method is disposed on the outer side of the filter member 1, and the non-woven layer 12 formed with the melt blown method is disposed on the inner side of the filter member 1, since the non-woven layer 12 with the span bond method is difficult to be formed of a synthetic fiber with a small diameter, it is possible to obtain rigidity (stiffness) of the non-woven layer 12, but it is difficult to reduce the average diameter of the air holes of the non-woven layer 12. As a result, the non-woven layer 12 formed with the melt blown method needs to capture lots of dust and the like. Consequently, the non-woven layer 12 formed with the melt blown method and disposed on the inner side is easily clogged over time. However, in the filter device F of the embodiment, the non-woven layer 12 disposed on the outer side captures dust and the like with larger particle diameters, and the non-woven layer 12 disposed on the inner side of the filter member 1 captures only dust and the like with relatively small particle diameters. Accordingly, it is possible to eliminate the clogging of the non-woven layer 12 disposed on the inner side of the filter member 1 as much as possible.

Among the more than two non-woven layers 12 formed with the melt blown method, the non-woven layer located on the most inner side of the filter member 1 has the air holes having an average diameter ranging from 5 µm to 10 µm. Further, among the more than two non-woven layers, a difference between the average diameter of the air holes of one non-woven layer located on the inner side of the filter member and the average diameter of the air holes of another non-woven layer adjacent to the non-woven layer and located on the outer side of the previous non-woven layer is less than 40 µm, thereby obtaining an excellent effect.

Specifically, considering a shape of dust and the like usually included in the fuel, it is possible to reduce dust and the like inside the fuel passing through the filtration by the filter member 1 with the structure described above. Also, it is possible to eliminate the clogging of the filter member for a long time.

Fig. 2 is a graph showing an example of the filter member 1 formed of the three non-woven layers 12 formed with the melt blown method.

The horizontal axis in Fig. 2 shows a diameter of the air holes of the non-woven layers 12, and the vertical axis shows a ratio of an area of air holes with a specific diameter relative to the whole air hole area of the non-woven layer 12.

In Fig. 2, a solid line represents a characteristic of the air holes of the non-woven layer 12 located on the most inner side of the filter member 1; a hidden line represents a characteristic of the air holes of the non-woven layer 12 located in the middle; and a projected line represents a characteristic of the air holes of the non-woven layer 12 located on the most outer side.

In the embodiment, the average diameter of the air holes of the non-woven layer 12 located on the most inner side of the filter member 1 is 7.1 µm; the average diameter of the air holes of the non-woven layer 12 located on the middle of the filter member 1 is 15.1 µm; and the average diameter of the air holes of the non-woven layer 12 located on the most outer side of the filter member 1 is 27.0 µm.

The difference of the average diameters of the air holes between the adjacent non-woven layers 12 is less than 40 µm, and the filtering slope becomes gentle.

Also, the outermost layer of the filter member 1 of the filter device F may be formed of a mesh 13.

With such a structure, the outermost layer separates moisture in the fuel from the fuel, so that the moisture does not enter the filter member. Further, the non-woven layer 12 formed with the melt blown method does not directly contact an inner wall Ta of the fuel tank T and the like, thereby preventing worn out. Specifically, when the inner wall Ta of the fuel tank T moves inside and outside due to a change in an inner pressure of the fuel tank T (expansion and contraction of the fuel tank T), friction may be caused between the lower surface 12 of the filter member 1 and the inner wall Ta of the fuel tank T. In the filter device F, the internal layer portion 13 formed of a non-woven fabric does not directly affected by the friction, thereby preventing the non-woven fabric of the internal layer portion 13 from getting frayed due to the friction.

The mesh fabric 13, i.e. the outermost layer, is typically formed of woven of a synthetic fiber such as nylon fiber, polyethylene fiber, polypropylene fiber, and the like, and has a mesh fine enough to separate water from oil. The mesh fabric 13 may be formed of, for example, folding weave, plain weave, twill weave, satin weave, and the like.

Also, the innermost layer of the filter member 1 may be formed of a non-woven layer 14 formed with the span bond method.

With such a structure, the innermost layer provides the filter member 1 with rigidity (stiffness), thereby easily maintaining a shape of the filter member 1. Also, the interval formation member 3 does not contact the non-woven layer 12 formed with the melt blown method, and contacts the non-woven layer 14 formed with the span bond method with rigidity higher than the non-woven layer 12.

Also, each layer of the filter member 1 formed of a plurality of layers may be formed of the same synthetic resin. For example, each layer is formed of polypropylene or nylon.

With such a structure, after constituent members of each layer formed in a sheet or a mat shape are laminated, each layer is integrated with welding to form the bag-shaped filter member 1.

In the embodiment shown in Fig. 3, the outermost layer of the filter member 1 is formed of the mesh fabric 13, and the innermost layer of the filter member 1 is formed of the non-woven layer 14 formed with the span bond method. Further, the filter member 1 is configured such that the non-woven layers 12 formed with the melt blown method are sandwiched between the mesh fabric 13 and the non-woven layer 14. Among the non-woven layers 12, the non-woven layer 12 contacting the innermost layer has the air holes having the average diameter smaller than that of the air holes of the non-woven layer 12 contacting the outermost layer.

The filter member 1 may be configured such that the non-woven layers 12 formed with the melt blown method include more than three layers. In such a case, the non-woven layer 12 located on the inner side of the filter member 1 has the air holes having a smaller average diameter, and the non-woven layer 12 located on the outer side of the filter member 1 has the air holes having a larger average diameter.

When the filter member 1 according to the embodiment shown in the drawings is formed, the two non-woven fabrics formed with the melt blown method are folded between the mesh fabric and the non-woven fabric formed with the span bond method, and the filter member 1 is folded such that the non-woven fabric formed with the span bond method is located on the inner side while the interval formation member 3 is fitted in the filter member 1. Then, heat seal portions 15 attaching one side with another side of the two-folded and overlapped non-woven fabrics are formed at an inner side of an edge portion along the edge portion excluding a folded edge portion, or along an edge portion excluding the folded edge portion. The communicating hole 11 connected to the cylindrical socket member 2 is formed in the four fabrics overlapped as described above before the filter member 1 is folded.

Alternatively, when the filter member 1 according to the embodiment shown in the drawing is formed, a first laminated member formed of overlapped two non-woven fabrics formed with the melt blown method and a second laminated member formed of overlapped two non-woven fabrics formed with the melt blown method are sandwiched between the mesh fabric and the non-woven fabric formed with the span bond method. The first laminated member and the second laminated member face in a state that the interval formation member 3 is held therebetween. Then, the heat seal portions 15 attaching the first laminated member and the second laminated member are formed along an outer side of the interval formation member 3 held therein. The communicating hole 11 connected to the cylindrical socket member 2 is formed in the first laminated member or the second laminated member in advance.

Before the filter member 1 is formed, it is possible to provide welded spots in the filter member 1 formed as stated above such that each layer forming the filter member 1 is attached at a portion except the heat seal portions 15.

Also, an unnecessary portion at an outer side of the heat seal portions 15 may be removed if necessary to adjust a shape of the filter member 1.

## Claims

1. A fuel filter device (F) to be attached to a fuel suction opening in a fuel tank (T), comprising a bag-shaped filter member (1) having at least two non-woven layers (12),
wherein one of said non-woven layers (12) situated on an inner side of the filter member has air holes with an average diameter smaller than those of the other of the non-woven layers situated on an outer side of the filter member, said at least two non-woven layers having a gentle filtering slope,
said fuel filter device (F) being **characterized in that** said filter member (1) further includes an outermost layer (13) formed of a mesh fabric.

2. A fuel filter device (F) according to claim 1, wherein said one of the non-woven layers (12) has the air holes with the average diameter ranging from 5 µm to 10 µm and smaller than those of the other of the non-woven layers by less than 40 µm.

3. A fuel filter device (F) according to claim 1 or 2, wherein said filter member (1) further includes an innermost non-woven layer (14) formed with a spun bond method.

4. A fuel filter device (F) according to any one of claims 1 to 3, wherein said at least two non-woven layers (12) are formed of a same material.
